Europäisches Patentamt

European Patent Office

Office européen des brevets

(19)

(11) Veröffentlichungsnummer : **0 075 649**
B1

(12) **EUROPÄISCHE PATENTSCHRIFT**

(45) Veröffentlichungstag der Patentschrift :
04.03.87

(51) Int. Cl.⁴ : **F 16 H   1/14, F 16 H   1/20**

(21) Anmeldenummer : 82104386.6

(22) Anmeldetag : 19.05.82

(54) **Zahnrad-Winkelgetriebe.**

(30) Priorität : 26.09.81 DE 3138458

(43) Veröffentlichungstag der Anmeldung :
06.04.83 Patentblatt 83/14

(45) Bekanntmachung des Hinweises auf die Patenterteilung : 04.03.87 Patentblatt 87/10

(84) Benannte Vertragsstaaten :
AT CH FR GB IT LI

(56) Entgegenhaltungen :
FR-A- 2 400 793
US-A- 2 654 267

(73) Patentinhaber : Eberhard Bauer Elektromotorenfabrik GmbH
Eberhard-Bauer-Strasse 36-59
D-7300 Esslingen (DE)

(72) Erfinder : Holz, Peter
Wiflingshauser Strasse 29
D-7300 Esslingen-Neckar (DE)

(74) Vertreter : Rüger, Rudolf, Dr.-Ing. et al
Patentanwälte Dr.-Ing. R. Rüger Dipl.-Ing. H.P. Bartheit Webergasse 3 Postfach 348
D-7300 Esslingen/Neckar (DE)

EP 0 075 649 B1

**Beschreibung**

Die Erfindung betrifft ein Zahnradwinkelgetriebe mit den Merkmalen des Oberbegriffs des Anspruches 1.

Bei diesem aus der FR-A-2 400 793 bekannten und ins Langsame übersetzenden Zahnradwinkelgetriebe treibt die Eingangswelle eine erste Stirnradgetriebestufe, wobei das Ritzel dieser Getriebestufe auf der Eingangswelle sitzt. Die Ausgangswelle der ersten Getriebestufe ist gleichzeitig die Ritzelwelle für eine nachfolgende Kegelradgetriebestufe, deren Ausgangswelle das Ritzel einer zweiten Stirnradgetriebestufe trägt. Die Ausgangswelle dieser zweiten Stirnradgetriebestufe ist auch gleichzeitig die Ausgangswelle des Zahnradwinkelgetriebes.

Mit dieser Anordnung ist es möglich, den Abstand zwischen den Austrittsstelle, der Ein- und der Ausgangswelle des Getriebes verhältnismäßig klein zu gestalten, kleiner jedenfalls, als wenn das gewünschte Übersetzungsverhältnis ohne Zwischenschaltung der beiden Stirnzahnradgetriebestufen direkt nur über die Kegelradstufe erfolgen würde.

Da jedoch in sämtlichen Stufen des bekannten Winkelgetriebes eine Drehzahlreduktion und damit eine Drehmomenterhöhung auftritt, muß die Kegelradstufe entsprechend groß dimensioniert ausgeführt sein. Entsprechend voluminös wird das Getriebegehäuse.

Aus der US-A-26 54 267 ist ein ins Schnelle übersetzendes Leistungsverzweigungsgetriebe bekannt, das so ausgebildet sein soll, daß keine Kippmomente auftreten, wenn an den Ausgangswellen unterschiedliche Drehmomente abgenommen werden. Zu diesem Zweck enthält das bekannte Leistungsverzweigungsgetriebe zwei Kegelradgetriebestufen, die beide über jeweils ins Schnelle übersetzende Stirnzahnradgetriebestufen von der Eingangswelle angetrieben werden. Jede der beiden Kegelradstufen treibt ausgangsseitig eine zugehörige zweite Stirnzahnradgetriebestufe, die ebenfalls ins Schnelle übersetzt.

Eine Volumenverringerung des Getriebes ist mit dieser bekannten Anordnung nicht beabsichtigt.

Ausgehend von diesem gattungsgemäßen Stand der Technik ist es Aufgabe der Erfindung, ein Zahnradwinkelgetriebe zu schaffen, bei dem der Abstand zwischen den Austrittsstellen der Ein- bzw. der Ausgangswelle aus dem Getriebegehäuse noch weiter verringert ist, während gleichzeitig bei unverändertem Drehmomentübertragungsvermögen die Abmessungen des Getriebegehäuses weiter verringert sind.

Diese Aufgabe wird erfindungsgemäß durch das Zahnradwinkelgetriebe mit den Merkmalen des Anspruches 1 gelöst.

Dadurch, daß die Ausgangswelle und die Kegelradstufe in dem Getriebegehäuse auf zwei verschiedenen Ebenen liegen, läßt sich im Vergleich zu Kegelradgetrieben, die das gleiche Untersetzungsverhältnis lediglich in der Kegelradstufe erbringen sollen, eine wesentliche Platzersparnis erzielen, weil der Raum unterhalb der Ausgangswelle zusätzlich genutzt werden kann. Da aber außerdem die erste Getriebestufe als eine ins Schnelle übersetzende Getriebestufe ausgebildet ist, vermindert sich entsprechend dem Übersetzungsverhältnis das von der Eingangswelle des Zahnradwinkelgetriebes auf die Kegelradstufe übertragene Drehmoment. Die an sich empfindliche Kegelradstufe wird hierdurch entlastet und kann deswegen ohne weiteres kleiner dimensioniert werden, verglichen beispielsweise mit einer Kegelradstufe, die ein gleiches oder größeres Drehmoment eingangsseitig verarbeiten müßte, als es in die Eingangswelle des Getriebes eingeleitet wird. Würde die erste Getriebestufe, um den gewünschten Achsabstand zu erhalten, wie beim Stand der Technik bereits als Untersetzungsgetriebestufe ausgebildet sein, müßte die Kegelradstufe insgesamt entsprechend größer dimensioniert werden, was zu einem entsprechenden Gehäusevolumen führt. Die Übersetzung der ersten Getriebestufe ins Schnelle dagegen gestattet eine wesentliche Verringerung der Kegelradstufe und damit die entsprechende Verringerung des gesamten Gehäusevolumens.

Außerdem kann auf die Ausgangswelle ein demgemäß großes Stirnzahnrad aufgesetzt werden, was einer entsprechend kleineren Zahnbeanspruchung unterliegt, was bei stoßweiser Drehmomentbeanspruchung von erheblicher Bedeutung ist.

In einer bevorzugten Ausführungsform liegt das mit der Ausgangswelle gekuppelte Stirnzahnrad hinter der Kegelradstufe, d. h. an dem freien Wellenende der Ausgangswelle, das von dem aus dem Gehäuse herausragenden Wellenstummel der Ausgangswelle abliegt. Hierdurch ist es möglich, den Winkelraum zwischen der Eingangs- und der Ausgangswelle, d. h. den Abstand zwischen denjenigen Stellen, an denen die Ein- und die Ausgangswelle aus dem Gehäuse austreten, noch weiter zu verringern.

Vorteilhafterweise ist die Anordnung weiter derart getroffen, daß die Eingangs- und die Ausgangswelle mit ihren Achsen in einer gemeinsamen Ebene liegen, die im Abstand parallel zu der die Wellenachsen der Kegelradstufen enthaltenen Ebene verläuft. Abhängig von den räumlichen Gegebenheiten des jeweiligen Einbauortes können aber auch die Achsen der Eingangswelle mit den Wellenachsen der Kegelradstufe in einer gemeinsamen Ebene liegen, wie es auch denkbar wäre, die Achsen der Eingangswelle zwischen der Ebene der Ausgangswelle und der die Wellenachsen der Kegelradstufe enthaltenen Ebene verlaufend anzuordnen.

Dabei ist es vorteilhaft, wenn eine Wellenachse der Kegelradstufe parallel zu der Achse der Ausgangswelle verläuft. Diese parallele Wellenachse kann mit Abstand neben der Achse der Ausgangswelle oder mit der Achse der Ausgangswelle in einer gemeinsamen Ebene liegend verlaufen, die rechtwinklig zu der anderen Wellenachse der Kegelradstufe sich erstreckt.

Einfache bauliche Verhältnisse ergeben sich, wenn die erste und/oder die zweite Getriebestufe Stirnradgetriebestufen sind.

In der Zeichnung ist ein Ausführungsbeispiel des Gegenstandes der Erfindung dargestellt. Es zeigen :

Figur 1 ein Diagramm zur Veranschaulichung des grundsätzlichen Aufbaus und des Platzbedarfes eines Winkelgetriebes gemäß der Erfindung, in perspektivischer Darstellung,

Figur 2 das dem Diagramm nach Fig. 1 entsprechende Winkelgetriebe in der Draufsicht, bei abgenommenen Getriebedeckel, teilweise im Querschnitt,

Figur 3 das Winkelgetriebe nach Fig. 2, geschnitten längs der Linie III-III der Fig. 2, in einer Seitenansicht, und

Figur 4 das Winkelgetriebe nach Fig. 3, geschnitten längs der Linie IV-IV der Fig. 3, in einer Draufsicht.

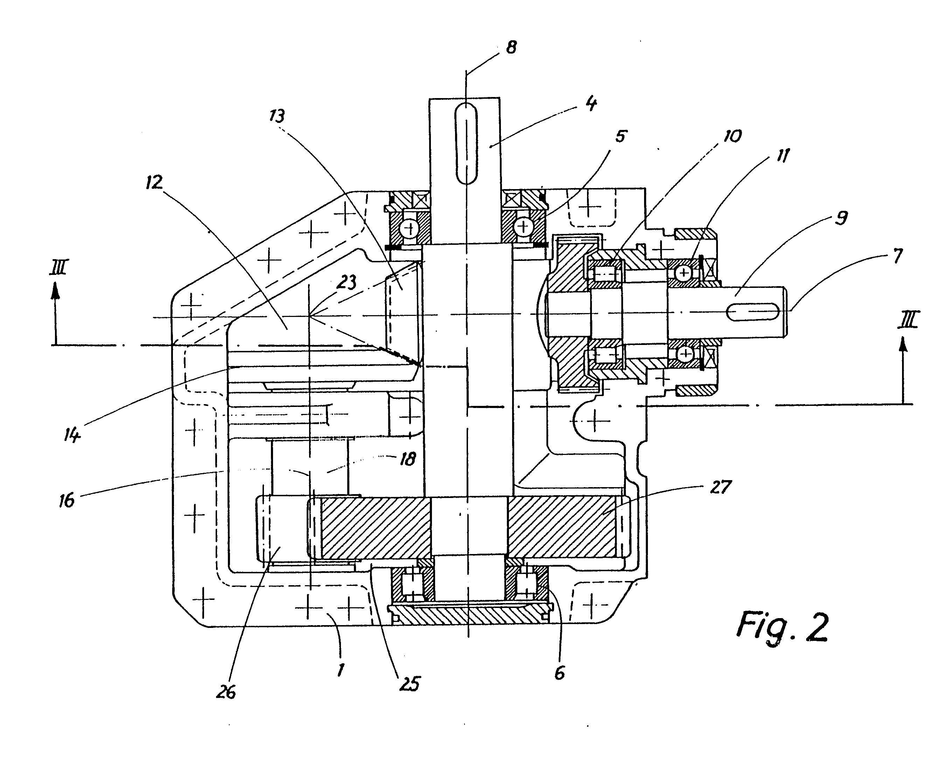

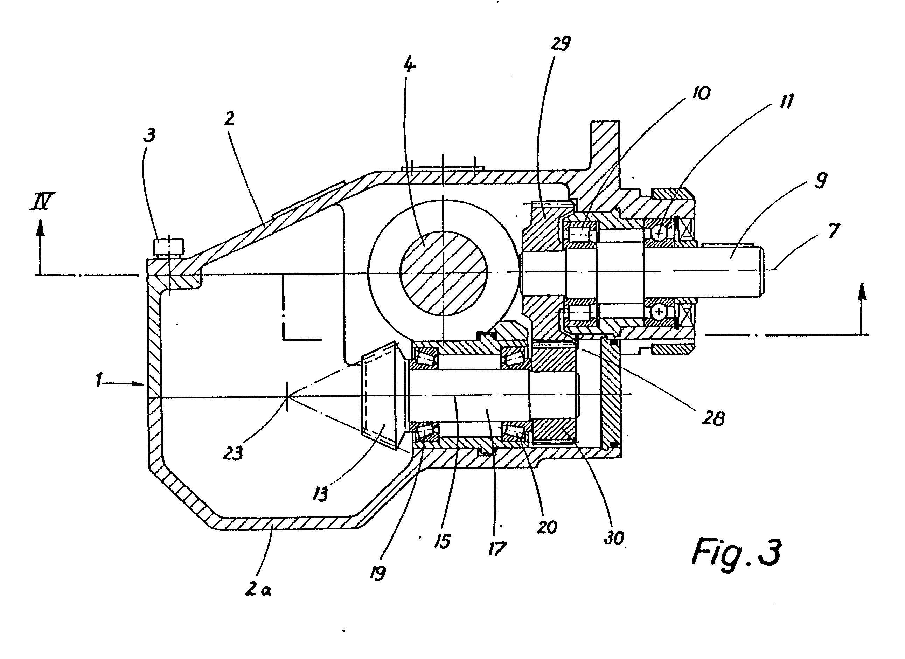

Das dargestellte Winkelgetriebe weist ein Getriebegehäuse 1 auf, das durch Gehäusedeckel 2, 2a verschlossen ist, die mittels Schraubenbolzen 3 mit dem Getriebegehäuse 1 verschraubt sind. In dem Getriebegehäuse 1 ist eine Ausgangswelle 4 mittels zweier Wälzlager 5, 6 drehbar gelagert, die in der aus Fig. 2 ersichtlichen Weise im Bereiche einander gegenüberliegender Seitenwände des Getriebegehäuses 1 angeordnet sind. Mit ihrer Achse 7 rechtwinklig zu der Achse 8 der Ausgangswelle 4 verlaufend ist in dem Getriebegehäuse 1 außerdem eine Eingangswelle 9 in zwei Wälzlagern 10, 11 drehbar gelagert, deren Achse 7 mit der Achse 8 der Ausgangswelle 4 in einer gemeinsamen Horizontalebene liegt (Fig. 3).

Die Eingangswelle 9 ist mit der Ausgangswelle 4 über eine Kegelradstufe 12 gekuppelt, die von zwei Kegelrädern 13, 14 mit sich kreuzenden Wellenachsen 15, 16 gebildet ist. Das den kleineren Teilkreisdurchmesser aufweisende Kegelrad 13 und das mit ihm in Eingriff stehende Kegelrad 14 mit dem größeren Teilkreisdurchmesser sind jeweils drehfest mit einer Welle 17 bzw. 18 verbunden ; die beiden Wellen 17, 18 sind in dem Getriebegehäuse 1 mittels Wälzlagern 19, 20 bzw. 21, 22 drehbar gelagert.

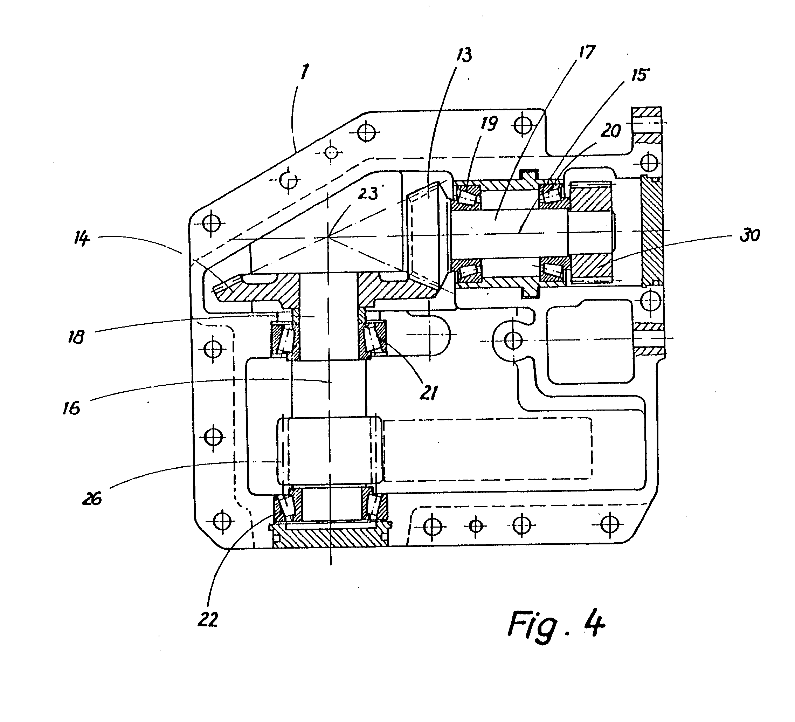

Die sich in einem Punkt 23 (Fig. 4) schneidenden Wellenachsen 15, 16 der Kegelradstufe 12 liegen, wie aus Fig. 3 ersichtlich, in einer Ebene, die im Abstand unterhalb einer dazu parallelen, die Achsen 7, 8 der Eingangswelle 9 und der Ausgangswelle 4 enthaltenden Ebene sich erstreckt. Die Kegelradstufe 12 ist dabei über eine zweite Getriebestufe 25 mit der Ausgangswelle 4 gekuppelt. Die Getriebestufe 25 besteht aus einem drehfest auf die Kegelradwelle 18 aufgesetzten stirnverzahnten Ritzel 26 und einem damit in Eingriff stehenden, drehfest mit der Ausgangswelle 4 verbundenen, ebenfalls stirnverzahnten Zahnrad 27, das in der aus Fig. 2 ersichtlichen

Weise unmittelbar neben dem Wälzlager 6 und somit in der Nähe des Endes der Ausgangswelle 4 angeordnet ist. Die zweite Getriebestufe 25 übersetzt die Ausgangsdrehzahl der Kegelradstufe 12 ins Langsame.

Auf der anderen Seite ist die Eingangswelle 9 mit der Kegelradstufe 12 über eine erste Getriebestufe 28 (Fig. 3) gekuppelt, welche ein drehfest auf der Eingangswelle 9 sitzendes stirnverzahntes Zahnrad 29 größeren Durchmessers und ein mit diesem in Eingriff stehendes ebenfalls stirnverzahntes Zahnrad 30 kleineren Durchmessers aufweist, das drehfest auf die Kegelradwelle 17 aufgesetzt ist. Die erste Getriebestufe 28 übersetzt die Drehzahl der Eingangswelle 9 somit ins Schnelle.

Die erste Getriebestufe 28 ist seitlich neben der Ausgangswelle 4 angeordnet (Fig. 3), während die Kegelradstufe 12 auf der gegenüberliegenden Seite der Ausgangswelle 4 mit der Kegelradwelle 18 parallel zur Ausgangswelle 4 ausgerichtet liegt. Dadurch, daß die erste Getriebestufe 28 die Drehzahl der Eingangswelle 9 zunächst erhöht, kann die Kegelradstufe 12 verhältnismäßig klein dimensioniert und hoch belastbar ausgelegt werden, während andererseits das auf der Ausgangswelle 4 sitzende große Stirnzahnrad 27 zu einer geringen Zahnbelastung führt.

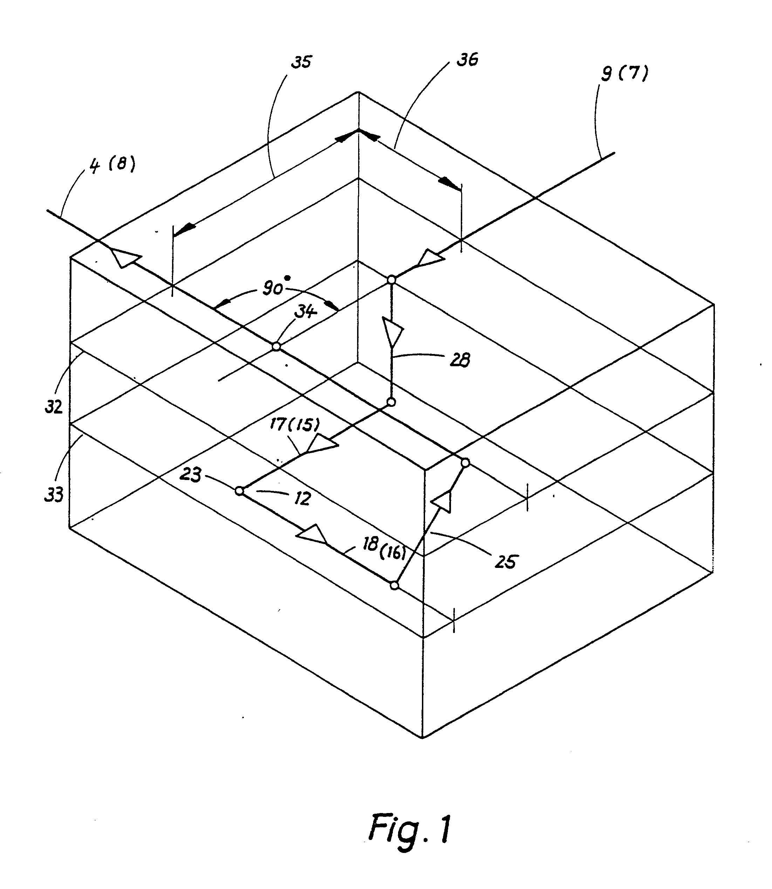

Das beschriebene Winkelgetriebe weist den aus Fig. 1 ersichtlichen grundsätzlichen Aufbau auf, der zeigt, das der dort mit den Bezugszeichen des erläuterten Winkelgetriebes versehene Drehmoment-Übertragungsweg von der Eingangswelle 9 zu der Ausgangswelle 4 einer Raumkurve folgt, die mit ihren Teilen in zwei verschiedenen Ebenen 32, 33 liegt. Die Achsen der Eingangswelle 9 und der Ausgangswelle 4 schneiden sich in der Ebene 32 in einem Punkt 34 ; sie stehen rechtwinklig aufeinander. Ohne daß der durch Pfeile 35, 36 angedeutete Achswinkelraum zwischen den beiden Wellen gegenüber einer einstufigen Ausführungsform vergrößert würde, kann das Winkelgetriebe durch die in die zweite Ebene erfolgte Verlagerung der Kegelradstufe 12 und die Verwendung der zusätzlichen Getriebestufen 25, 28 sowohl eine hohe Übersetzung als auch eine hohe Drehmomentbelastbarkeit aufweisen.

## Patentansprüche

1. Zahnradwinkelgetriebe mit einem Gehäuse (1), in dem eine Eingangswelle (9) sowie eine Ausgangswelle (4) drehbar gelagert sind, deren Achsen (7, 8) rechtwinklig zueinander verlaufen, mit einer ersten Getriebestufe (28), über die die Eingangswelle (9) mit einer Kegelradstufe (12) gekuppelt ist, sowie mit einer zweiten Getriebestufe (25), über die die Kegelradstufe (12) mit der Ausgangswelle (4) gekuppelt ist, wobei die sich schneidenden Wellenachsen (15, 16) der Kegelradstufe (12) und die Achse (8) der Ausgangswelle (4) unter Ausbildung eines einer Raumkurve (Fig. 1) folgenden Drehmomentübertragungsweges in zwei verschiedenen Ebenen (32, 33) liegen, dadurch gekennzeichnet, daß die erste Getriebestufe (28) eine die Drehzahl der Eingangswelle (9) ins Schnelle übersetzende Übersetzungsstufe ist.

2. Winkelgetriebe nach Anspruch 1, dadurch gekennzeichnet, daß die Eingangs- und die Ausgangswelle (9, 4) mit ihren Achsen (7, 8) in einer gemeinsamen Ebene (32) liegen, die im Abstand parallel zu der die Wellenachsen (15, 16) der Kegelradstufe (12) enthaltenden Ebene (33) verläuft.

3. Winkelgetriebe nach Anspruch 1, dadurch gekennzeichnet, daß die Achse (7) der Eingangswelle (9) des Winkelgetriebes mit der Wellenachse (15) der Welle (17) der Kegelradstufe (12) in einer gemeinsamen Ebene (33) liegt.

4. Winkelgetriebe nach Anspruch 1, dadurch gekennzeichnet, daß die Achse (7) der Eingangswelle (9) zwischen der Ebene (32) der Ausgangswelle (4) und der die Wellenachsen (15, 16) der Kegelradstufe (12) enthaltenden Ebene (33) verlaufend angeordnet ist.

5. Winkelgetriebe nach einem der vorhergehenden Ansprüche, dadurch gekennzeichnet, daß eine Wellenachse (16) der Kegelradstufe (12) parallel zu der Achse (8) der Ausgangswelle (4) verläuft.

6. Winkelgetriebe nach Anspruch 5, dadurch gekennzeichnet, daß die parallele Wellenachse (16) im Abstand neben der Achse (8) der Ausgangswelle (4) verläuft.

7. Winkelgetriebe nach Anspruch 5, dadurch gekennzeichnet, daß die parallele Wellenachse (16) mit der Achse (8) der Ausgangswelle (4) in einer gemeinsamen Ebene liegt, die rechtwinklig zu der durch die Wellenachsen (15, 16) der Kegelradstufe (12) gebildeten Ebene verläuft.

8. Winkelgetriebe nach Anspruch 1, dadurch gekennzeichnet, daß die erste und/oder die zweite Getriebestufe (28 bzw. 25) Stirnrad-Getriebestufen sind.

9. Winkelgetriebe nach einem der vorhergehenden Ansprüche, dadurch gekennzeichnet, daß die zweite Getriebestufe (25) eine die Ausgangsdrehzahl der Kegelradstufe (2) ins Langsame untersetzende Untersetzungsstufe ist.

10. Winkelgetriebe nach Anspruch 8, dadurch gekennzeichnet, daß die zweite Getriebestufe (25) mit der Ausgangswelle (4) in der Nähe des freien Wellenendes gekuppelt ist.

## Claims

1. Toothed-wheel angle transmission having a housing (1) in which an input shaft (9) and an output shaft (4) are rotatably mounted, the axes (7, 8) of which extend at right angles to one another, with a first transmission stage (28) through which the input shaft (9) is coupled with a bevel wheel stage (12), and with a second transmission stage (25) through which the bevel wheel stage (12) is coupled with the output shaft (4), while the intersecting shaft axes (15, 16) of the bevel wheel stage (12) and the axis (8) of the output shaft (4) lie in two different planes (32, 33), with formation of a torque transmission path following a three-dimensional curve (Figure 1), characterised in that the first gear stage (28) is a transmission stage stepping up the rotation rate of the input shaft (9).

2. Angle transmission according to claim 1, characterised in that the input and output shafts (9, 4) lie with their axes (7, 8) in one common plane (32) which extends with spacing parallel to the plane (33) containing the shaft axes (15, 16) of the bevel wheel stage (12).

3. Angle transmission according to claim 1, characterised in that the axis (7) of the input shaft (9) of the angle transmission lies in a common plane (33) with the shaft axis (15) of the shaft (17) of the bevel wheel stage (12).

4. Angle transmission according to claim 1, characterised in that the axis (7) of the input shaft (9) is arranged extending between the plane (32) of the output shaft (4) and the plane (33) containing the shaft axes (15, 16) of the bevel wheel stage (12).

5. Angle transmission according to one of the preceding claims, characterised in that one shaft axis (16) of the bevel wheel stage (12) extends parallel with the axis (8) of the output shaft (4).

6. Angle transmission according to claim 5, characterised in that the parallel shaft axis (16) extends with spacing beside the axis (8) of the output shaft (4).

7. Angle transmission according to claim 5, characterised in that the parallel shaft axis (16) lies with the axis (8) of the output shaft (4) in a common plane which lies at right angles to the plane formed by the shaft axes (15, 16) of the bevel wheel stage (12).

8. Angle transmission according to claim 1, characterised in that the first and/or the second gear stage or stages (28 and/or 25) is or are spur wheel gear stages.

9. Angle transmission according to one of the preceding claims, characterised in that the second gear stage (25) is a transmission stage which steps down the output rotation rate of the bevel wheel stage (2).

10. Angle transmission according to claim 8, characterised in that the second gear stage (25) is coupled with the output shaft (4) in the vicinity of the free shaft end.

## Revendications

1. Engrenage conique à roues dentées constitué par un carter (1) renfermant un arbre primaire (9) ainsi qu'un arbre secondaire (4) montés rotatifs et dont les axes (7, 8) sont disposés à angle droit l'un par rapport à l'autre, par un premier étage d'engrenages (28) accouplant l'arbre primaire (9) à un étage (12) à roues coniques ainsi que par un second étage d'engrenages (25) accouplant l'étage (12) à roues coniques à l'arbre secondaire (4), les axes (15, 16), se coupant, des

**0 075 649**

arbres de l'étage (12) à roues coniques et l'axe (8) de l'arbre secondaire (4) étant situés dans deux plans différents (32, 33) en formant un trajet de transmission du couple suivant une courbe spatiale (figure 1), caractérisé par le fait que le premier étage d'engrenage (28) est un étage multiplicateur multipliant la vitesse de rotation de l'arbre primaire (9).

2. Engrenage conique selon la revendication 1, caractérisé par le fait que les axes (7, 8) des arbres primaire et secondaire (9, 4) se situent dans un plan commun (32) qui est disposé à distance parallèlement au plan (33) contenant les axes (15, 16) des arbres de l'étage (12) à roues coniques.

3. Engrenage conique selon la revendication 1, caractérisé par le fait que l'axe (7) de l'arbre primaire (9) de l'engrenage conique et l'axe (15) de l'arbre (17) de l'étage (12) à roues coniques se situent dans un plan commun (33).

4. Engrenage conique selon la revendication 1, caractérisé par le fait que l'axe (7)· de l'arbre primaire (9) est disposé entre le plan (32) de l'arbre secondaire (4) et le plan (33) contenant les axes (15, 16) des arbres de l'étage (12) à roues coniques.

5. Engrenage conique selon l'une des revendications précédentes, caractérisé par le fait qu'un axe (16) de l'arbre de l'étage (12) à roues coniques est disposé parallèlement à l'axe (8) de l'arbre secondaire (4).

6. Engrenage conique selon la revendication 5, caractérisé par le fait que l'axe (16) parallèle de l'arbre est disposé à distance à côté de l'axe (8) de l'arbre secondaire (4).

7. Engrenage conique selon la revendication 5, caractérisé par le fait que l'axe (16) parallèle de l'arbre et l'axe (8) de l'arbre secondaire (4) sont situés dans un plan commun qui est disposé perpendiculairement au plan formé par les axes (15, 16) de l'étage (12) à roues coniques.

8. Engrenage conique selon la revendication 1, caractérisé par le fait que le premier et/ou le second étage d'engrenages (28, 25) sont des étages d'engrenages à roues droites.

9. Engrenage conique selon l'une des revendications précédentes, caractérisé par le fait que le second étage d'engrenages (25) est un étage démultiplicateur réduisant la vitesse de rotation initiale de l'étage (12) à roues coniques.

10. Engrenage conique selon la revendication 8, caractérisé par le fait que le second étage d'engrenage (25) est accouplé à l'arbre secondaire (4) au voisinage de l'extrémité libre de l'arbre.

Fig. 1

Fig. 2

Fig. 3

Fig. 4

0 075 649